# EUROPEAN PATENT SPECIFICATION

(11) **EP 2 222 103 B1**
(45) Date of publication and mention of the grant of the patent: **07.05.2014**
(21) Application number: 09174223.9
(22) Date of filing: 27.10.2009
(51) Int. Cl.: H04W 8/18

(54) **System and method for scanning when operating in different regulatory domains**
System und Verfahren zum Scannen beim Arbeiten in verschiedenen Regelungsdomänen
Système et procédé pour le balayage en cours de fonctionnement dans différents domaines réglementaires

(30) Priority: 24.02.2009 US 391597
(43) Date of publication of application: 25.08.2010
(73) Proprietor: BlackBerry Limited, Waterloo, ON N2K 0A7 (CA)
(72) Inventor: Wijayanathan, Maiyuran, Waterloo Ontario N2L 3W8 (CA); Naqvi, Noushad, Waterloo Ontario N2L 3W8 (CA)
(74) Representative: Roberts, Gwilym Vaughan

(56) References cited:
- EP-A1- 1 681 804
- US-A1- 2006 040 661
- US-A1- 2006 282 554
- "Universal Mobile Telecommunications System (UMTS); Characteristics of the Universal Subscriber Identity Module (USIM) application (3GPP TS 31.102 version 8.3.0 Release 8); ETSI TS 131 102" ETSI STANDARD, EUROPEAN TELECOMMUNICATIONS STANDARDS INSTITUTE (ETSI), SOPHIA ANTIPOLIS CEDEX, FRANCE, vol. 3-T3, no. V8.3.0, 1 October 2008 (2008-10-01), XP014042584

## Description

### BACKGROUND

As used herein, the terms "user equipment" and "UE" might in some cases refer to mobile devices such as mobile telephones, personal digital assistants, handheld or laptop computers, and similar devices that have telecommunications capabilities. Such a UE might consist of a UE and its associated removable memory module, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might consist of the device itself without such a module. In other cases, the term "UE" might refer to devices that have similar capabilities but that are not transportable, such as desktop computers, set-top boxes, or network appliances. The term "UE" can also refer to any hardware or software component that can terminate a communication session for a user. Also, the terms "user agent," "UA," "user equipment," "UE," "user device" and "user node" might be used synonymously herein.

As telecommunications technology has evolved, more advanced network access equipment has been introduced that can provide services that were not possible previously. This network access equipment might include systems and devices that are improvements of the equivalent equipment in a traditional wireless telecommunications system. Such advanced or next generation equipment may be included in evolving wireless communications standards, such as long-term evolution (LTE). For example, an LTE system might include an enhanced node B (eNB), a wireless access point, or a similar component rather than a traditional base station. As used herein, the term "access node" will refer to any component of the wireless network, such as a traditional base station, a wireless access point, or an LTE eNB, that: creates a geographical area of reception and transmission coverage allowing a user equipment (UE) or a relay node to access other components in a telecommunications system.

US 2006/0282554 A1 discloses a method, apparatus and computer program providing network associated system priority list for multi-mode systems selection. The method includes provisioning a multi-mode wireless communication terminal with at least one system priority list (SPL) having information that identifies a plurality of wireless network systems types and, for each identified wireless network system type, at least one network of that type. The method selects from the SPL a wireless network for service selectively based on one of a manually specified priority, a priority specified automatically and a priority that is specified for use automatically only during a power-on mode of operation.

US 2006/0040661 A1 discloses a method for operating terminals of a mobile radio communication system. This system is for operating terminals of a mobile radio communication system operating preferably under a UMTS standard and at least one wireless local area network (WLAN). At least one piece of access data can be stored on the terminal, with the access data being encoded in such a way that the access data comprises at least one first piece of identifying data for the mobile radio communication system and at least one second piece of identifying data for the local area network.
3GPP document TS 31.102 V8.3.0 (2008-09) describes the Elementary File for user and operator controlled PLMN selector for WLAN access

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 is a table illustrating an elementary file, or at least some contents of an elementary file, for a user controlled public land mobile network selector for wireless local area network access, according to an embodiment of the present disclosure.
Figure 2 is a table illustrating an elementary file, or at least some contents of an elementary file, for an operator controlled public land mobile network selector for wireless local area network access, according to an embodiment of the present disclosure.
Figure 3 is a flowchart illustrating a process of using an elementary file during wireless local area network access, according to an embodiment of the disclosure.
Figure 4 is a diagram illustrating a system suitable for implementing an embodiment of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

An issue can arise when a UA moves from one regulatory domain to a different regulatory domain because different regulatory domains (such as North America and Europe) use different sets of wireless communication frequencies. For this reason, the UA may experience a delay when attempting to establish a connection to a network access point.

Previously UAs had a fixed set of frequencies that the UA would attempt to scan in a particular order. If the UA does not connect to an access point using any of the frequencies in the fixed set, then the UA will scan for any available frequency that the UA can use. Because the required frequency in the new regulatory domain may be different than any of the frequencies in the fixed set, the UA might scan through all of the frequencies in the fixed set and then also scan through many more frequencies in the set of all possible frequencies the UA could use. This process is not only time consuming, but also uses an undesirable amount of battery power.

The present disclosure provides for identifying the regulatory domain in which the UA physically resides. A processor in the UA can then update the set of frequencies to be searched based on the identified regulatory domain. Updating the set of identified domains can be performed by either re-prioritizing the set or by causing a different set of frequencies to be used instead. Thus, regardless of the regulatory domain in which the UA is located, the UA will first scan those frequencies that are most likely to result in a connection to an access point of the particular regulatory domain in which the UA is located.

In a specific embodiment, a user agent is provided that includes a bus, a network connectivity device connected to the bus, and a memory connected to the bus. One or more memories of the UA stores at least some contents of an elementary file containing a list of wireless local area network (WLAN) based network frequencies. In an embodiment, the WLAN based network frequencies are public land mobile network (PLMN) frequencies. The contents of the elementary file further contain at least one entry relating to at least one of regulatory domain information and/or channel allocation information. The UA also includes a processor connected to the bus. The processor is configured to update the list based on at least one entry and to promote initial access point scanning of the WLAN based frequencies according to an order specified in the updated list. As used herein, the term "elementary file" may refer to an elementary file, or any file, system, format, arrangement, structure, or other data stored on a tangible computer readable medium. As used herein, the "contents of an elementary file" refers to a portion of the total data contained in an elementary file. The contents of an elementary file can be downloaded to a UA for the purpose of initial access point scanning to obtain WLAN connectivity.

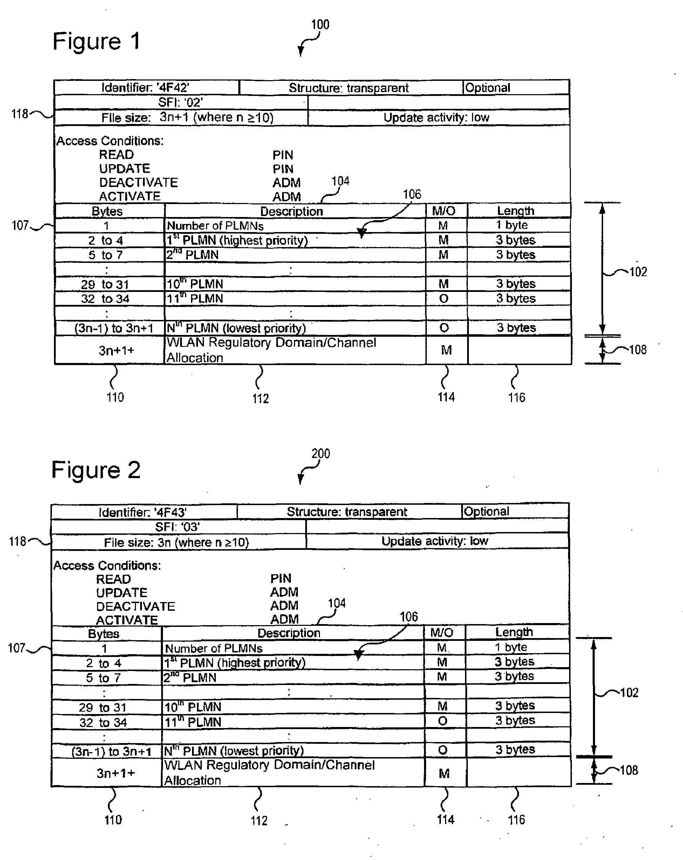

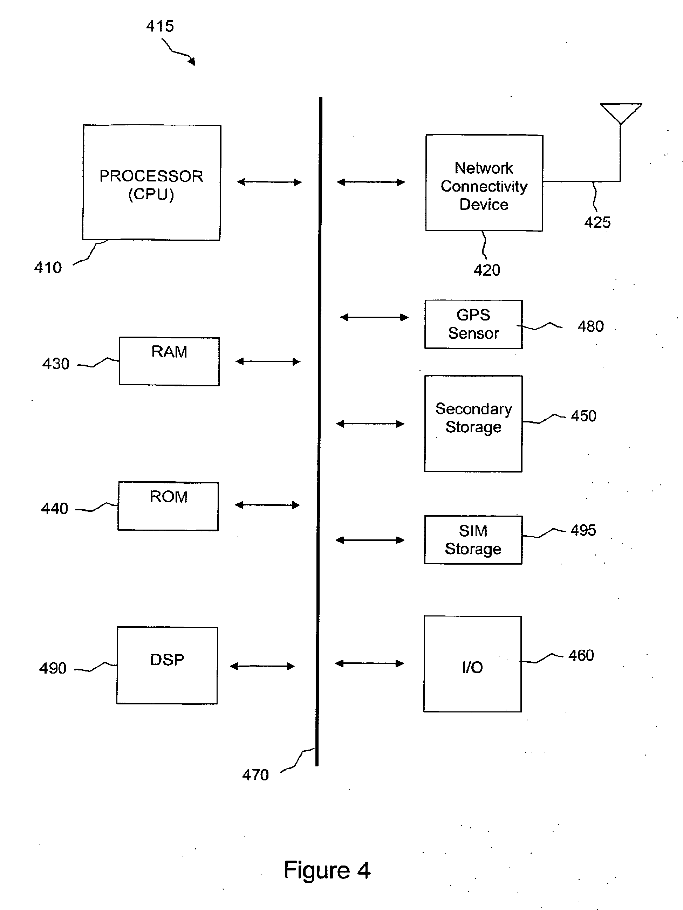

Figure 1 is a table 100 illustrating an elementary file, or at least some contents of an elementary file, for a user controlled public land mobile network selector for wireless local area network access, according to an embodiment of the present disclosure. Table 100 can be stored in a data processing system or a user agent, such as system 415 of Figure 4, or alternatively can be read by a UA. Table 100 shows modifications to known elementary files or elementary file contents that are described in the 3GPP technical specifications. In particular, table 100 represents a modified "EF_{UPLMNWLAN}", which is a kind of elementary file that can be described as a user controlled public land network (PLMN) selector for wireless local area network (WLAN) access.

The information contained in table 100 may be stored in any memory of a UA, but particularly may be stored in a subscriber identity module (SIM) card that is associated with a particular user. The UA uses the information in table 100 to attempt, in the order given in priority section 102, to access the WLAN using sets of PLMN frequencies defined in the description section 104. Each listing of a "PLMN," such as in box 106, can relate to either a single frequency or a range of frequencies. Box 106 represents the first frequency or range of frequencies that the UA will attempt to scan when the UA attempts to establish a connection.

However, an issue can arise with respect to older UAs in that the priority list given in priority section 102 is fixed, and possibly hard-coded into a UA. In other words, no mechanism existed to change the list for an initial scan, such as when the UA is initially powered-on. Such a fixed priority list can be disadvantageous when moving among different regulatory domains because each regulatory domain may use different sets of frequencies for wireless access.

For example, a user physically moves back and forth between North America and Europe. These two geographical regions are also different regulatory domains with differently defined WLAN based frequencies for use by user agents. When an older UA that reads a fixed list is powered on, the older UA automatically scans frequencies using the priority list given in priority section 102, regardless of whether the older UA is in North America or Europe. At best, the priority section 102 is optimized for use in one of the two regulatory domains. However, the priority section 102 may be optimized for an entirely different regulatory domain, such as one in Asia, which means that the list is not optimized for either of the two regulatory domains. When the older UA is not in a preferred regulatory domain (meaning the priority section 102 is not optimized for the current regulatory domain), the older UA may be forced to scan all channels (sets of frequencies) in the priority list before attempting to associate with an access point (AP). If none of the WLAN based frequencies in description section 104 contain a usable frequency, then the older UA may be forced to scan through all possible frequencies that the older UA can use. This process is not only time consuming, but also uses an undesirable amount of limited battery power.

In some embodiments, the present disclosure, and particularly the additional information in table 100, provides devices and methods for overcoming the issues described above. In particular, table 100 is extended to include a new set of fields identified in sections 107 and 108. In an optional embodiment, the new fields in section 107 provide that the first byte identifies the number of PLMNs that are contained in the list (with each PLMN entry containing the frequency list and the transmit power, in addition to the country code and network code). In another embodiment, the new fields in section 108 allow the UA to update the list provided in priority section 102 by replacing the list provided in priority section 102 with an updated list that is associated with a particular regulatory domain. Specifically, section 108 informs the UA that the UA should read the contents of an elementary file associated with a particular regulatory domain.

In another embodiment, the new fields in section 108 provide for a flag that allows the UA to read a list provided in section 108 or to read the current list provided in section 102. The flag may be triggered if the UA senses that it has moved from one regulatory domain to another, as described further below. In any case, the UA will be able to first scan those WLAN based frequencies that are most likely to allow for successful connection to an access point, regardless of the regulatory domain or country in which the UA is currently located.

In section 108, field 110 describes which bytes in the elementary file contain the associated regulatory domain information and/or channel information. Field 112 represents a reference to the actual regulatory domain information or the channel allocation information; or, optionally, field 112 actually contains the actual regulatory domain information or the channel allocation information. Field 114 contains an entry that identifies whether the fields in section 108 are mandatory ("M") or optional ("O"). In the embodiments shown in Figure 1, section 108 is mandatory, but could potentially be optional. Field 116 represents a length of the entry in section 108; however, an entry in field 116 may be of variable length, depending on a number of channels or regulatory domains to be stored and/or read. In addition to these fields in section 108, table 100 may contain an updated file size field 118 that describes the overall size of the elementary file.

As mentioned above, field 112 contains or refers to regulatory domain information and/or channel allocation information. Field 112 associates the regulatory domain information and/or channel allocation information to a particular regulatory domain. Thus, for example, the regulatory domain of "North America" is associated with a first set of regulatory domain information and/or channel allocation information, whereas the regulatory domain of "Europe" is associated with a second set of regulatory domain information and/or channel allocation information.

Each set of regulatory domain information and/or channel allocation information describes a new list of information. Thus, for example, field 112 contains or refers to information that will instruct the UA to replace the priority list in priority section 102 in favor of an updated priority list. The updated priority list is optimized for use in the particular regulatory domain in which the UA is associated.

The UA may scan WLAN based frequencies in an order that results in the fastest possible connection to an access point. Stated differently, field 112 allows the UA to scan frequencies in an order that is updated to correspond to the regulatory domain in which the UA happens to be located, even if the user has moved from one regulatory domain to another. In an embodiment, the information in section 108 may be dynamically changed by a user. In another embodiment, the information in section 102 may be dynamically changed by a user. In yet another embodiment, both may be dynamically changed by a user.

Thus, the UA can be updated as to the regulatory domain in which the UA is located, and/or as to relevant channel information, according to any number of different methods. Once the UA has received information regarding in which regulatory domain the UA is located, the UA can use field 112 to update the priority list provided in priority section 102 or 108.

The following examples provide non-limiting examples of how the UA can receive information that indicates the regulatory domain in which the UA is located. In one example, the UA is equipped with a global positioning satellite (GPS) reader that can determine the physical location of the UA on the Earth. Based on the determined position, the UA can select the proper regulatory domain.

In another example, the UA can establish contact with an access point of a regulatory domain, possibly using the less efficient, prior art, method of access. The UA may then determine, based on the channel information used, frequency used, or other downloaded information, the regulatory domain in which the UA is located. If the regulatory domain has changed, then the UA uses the information in field 112 to update the priority list in priority section 102. Thereafter, on subsequent attempts to connect to an access point, the UA will use the updated priority information for the current regulatory domain.

In yet another example, the UA may be programmed to receive user input regarding the regulatory domain in which the UA is present. In this case, the UA may scan the WLAN based frequencies after the user has input the current regulatory domain. The contents of elementary file shown in Figure 1 are particularly suited for this method, as table 100 represents a user controlled selector file.

In yet another example, the UA can obtain location information directly through the network, such as a cellular network (or any Wide Area Network) to which the UA attaches. The UA can then use the location information obtained from the network to determine the regulatory domain and/or channel information, and from there the UA may use the regulatory domain and/or channel information to update the priority list. In still another embodiment, the network may directly provide the regulatory domain and/or channel information to the UA before the UA attaches to the WLAN network.

In still another example, one or more of the above examples may be combined. For example, the UA could select a particular priority list based on the physical location of the UA, connect to an access point using a particular frequency, and then update the list again so that the UA will attempt to connect to that particular frequency first on a subsequent attempt. Thus, the list can be updated again based on the "last registered" frequency or "last registered" regulatory domain. Still other techniques can be used for determining the regulatory domain in which a UA is located, either before or after thee UA scans WLAN based frequencies in an attempt to attach to an access point.

Additionally, should the UA fail to attach to an access point using the updated priority list given in priority section 102, the UA can still scan all frequencies available to the UA in an attempt to attach to an access point. Upon a successful connection, the UA can then store the frequency which resulted in successful communication, and then update field 112 and/or priority section 102 such that the UA will, on subsequent attempts, scan that frequency first.

Currently, at least five regulatory domains exist, including the Americas, Europe, Israel, China, and Japan. Other regulatory domains exist, and additional regulatory domains may be added or split off from existing regulatory domains. The embodiments contemplate using the above-described devices and techniques for updating priority section 102 for any of these regulatory domains, whether existing currently or in the future.

The contents of elementary file represented by table 100 (or the entire elementary file) can be stored in any convenient memory of a UA. In a specific embodiment, the contents of the elementary file (or the entire elementary file) can be stored in a subscriber identity module (SIM) card of the UA.

Figure 2 is a table 200 illustrating an elementary file, or at least some contents of an elementary file, for an operator controlled public land mobile network selector for wireless local area network access, according to an embodiment of the present disclosure. Table 200 can be implemented in a data processing system or a user agent, such as system 415 of Figure 4. Table 200 modifies and extends known elementary files, as described in the 3GPP technical specifications. In particular, table 200 represents a modified "EF_{OPLMNWLAN}", which is a kind of elementary file that can be described as an operator controlled public land network (PLMN) selector for wireless local area network (WLAN) access.

A UA uses the contents of the elementary file represented by table 200 in a manner similar to that described with respect to table 100 of Figure 1. Thus, Figure 2 contains reference numerals common to Figure 1, with common reference numerals having similar functions. Thus, a UA can use table 200 to scan WLAN based frequencies according to an order that is specific to a particular regulatory domain in which the UA is located, even if the UA has moved from one regulatory domain to another.

The primary difference between table 200 of Figure 2 and table 100 of Figure 1 is that table 100 represents contents of an elementary file for use as a user controlled PLMN selector for WLAN access, but table 200 represents other contents for an elementary file for use as an operator controlled PLMN selector for WLAN access. Current UAs may use both a user controlled selector and an operator controlled selector, though in both cases prior art selectors do not contain the fields in section 108. However, the embodiments contemplate use of one or both of the selectors embodied by the elementary files represented by table 100 or table 200.

In the embodiments described herein, a user may be the operator of the UA. An operator may be the company or other entity that provides wireless communication service, or other infrastructure that allows the UA to communicate wirelessly. A non-limiting example of an operator is a wireless communications business.

Using the operator controlled selector (the contents of the elementary file represented by table 200) allows the operator to provide, transparent to the user, the UA with information regarding in which regulatory domain the UA is operating. Alternatively or in addition, the operator can automatically update the fields in section 108 and/or priority section 102. The operator can also update the fields in section 108 to include new lists, reprioritized lists, and/or new information for new regulatory domains.

As stated above, use of the operator controlled selector is not exclusive with use of the user controlled selector. Thus, for example, a user could input data into the UA which informs the UA of the regulatory domain in which the UA is located. Possibly, the user could directly change the data in any of the fields in the priority section 102 or section 108. The UA could then receive updates to the operator controlled selector, which in turn updates the list again.

In still other embodiments, the regulatory domain/channel allocation information in field 112 may contain or refer to additional information, including but not limited to transmission power. Transmission power could also be added to the fields in the list provided in section 102 or 108. In yet other embodiments, sections in addition to section 108 could be added to include regulatory domain information, channel allocation information, and/or other information for use by the UA to achieve greater efficiency in a given regulatory domain.

Thus, the techniques described with respect to Figure 1 and Figure 2 provide for many different embodiments. In a specific embodiment, a user agent is provided that includes a bus, a network connectivity device connected to the bus, and a memory connected to the bus. The memory stores contents of an elementary file referring to a list of wireless local area network (WLAN) based frequencies, which may be public land mobile network (PLMN) frequencies. The contents of the elementary file further contain or refer to at least one entry relating to at least one of regulatory domain information and/or channel allocation information. The UA also includes a processor connected to the bus. The processor is configured to update the list based on the at least one entry and to promote initial access point scanning of the WLAN based frequencies according to an order specified in the updated list.

In another embodiment, the processor is further configured to, after a successful association with an access point (AP), store in the memory a current regulatory domain associated with the successful association. In this case, the processor is further configured to update the list again based on the current regulatory domain.

In another embodiment, the UA could be programmed to modify existing elementary files. Thus, for example, the processor may be further configured to add the at least one entry to a pre-existing elementary file.

In still another embodiment, the processor is further configured to receive at least one of updated regulatory information and updated channel allocation information. In this case, the processor is further configured to update the list again based on the at least one of updated regulatory information and updated channel allocation information.

In a related embodiment, the information is provided by a user for a user controlled elementary file. Alternatively, the information is provided by a user for an operator controlled elementary file. Still further, the information can be defined in association with a physical location of the UA, as either measured by the UA or determined by the operator or the user.

In another embodiment, the information comprises regulatory information comprising a plurality of regulatory domains and their corresponding WLAN based frequencies. Alternatively or in addition, the information comprises channel allocation information comprising channel ranges.

In still another embodiment, the at least one entry comprises a plurality of regulatory domains and corresponding additional lists of WLAN based frequencies associated with the plurality of regulatory domains. In this case, the processor may be configured to update, by selecting from the additional lists, a particular list that corresponds to a particular detected regulatory domain. However, the processor may be configured to update by changing an order of the list.

In yet another embodiment, a corresponding field in the elementary file is associated with each PLMN frequency. In this case, the corresponding field defines at least one of corresponding regulatory domain information and/or corresponding channel allocation information. Additionally, the contents of the elementary file may contain a temporary user identifier for subscriber identification.

The embodiments also contemplate the inventions embodied as a tangible computer readable medium. For example, the exemplary computer readable medium may store a data structure comprising contents of an elementary file for selecting wireless local area network (WLAN) based frequencies, which may be public land mobile network (PLMNs) frequency. The contents of the elementary file comprises a list of WLAN based frequencies and at least one entry relating to at least one of regulatory domain information and/or channel allocation information. The at least one entry can be used to update the list. Other embodiments of a computer readable medium can include the other features described above with respect to a user agent.

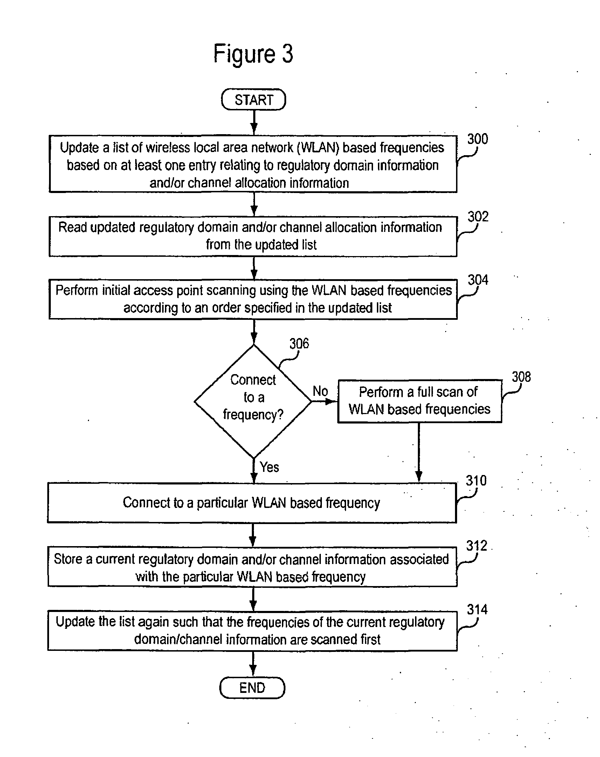

Figure 3 is a flowchart illustrating a process of using an elementary file during wireless local area network access, according to an embodiment of the disclosure. The process shown in Figure 3 can be implemented by a processor, such as system 415 in Figure 4, using contents of one or more elementary files, such as the contents represented by table 100 of Figure 1 or table 200 of Figure 2.

The process begins as the processor updates a list of WLAN based frequencies based on at least one entry relating to regulatory domain formation and/or channel allocation information (block 300). The WLAN based frequencies may be WLAN based PLMN frequencies. The processor then reads an updated regulatory domain and/or channel allocation information from the updated list (block 302). The processor then performs or promotes initial access point scanning using the WLAN based frequencies according to an order specified in the updated list (block 304).

The processor then determines if the UA has connected to a particular frequency (block 306). If the UA has not connected to a particular frequency, then the UA performs a full scan of WLAN based frequencies (block 308). Thereafter, or in the event of a "yes" determination at block 306, the user agent connects to the particular WLAN based frequency (block 310).

Thereafter, the processor may cause storage of a current regulatory domain associated with the particular WLAN based frequency (block 312). The processor may then update the list again such that, on subsequent attempts to connect to the network, the frequencies of the current regulatory domain are scanned first (block 314). The process terminates thereafter.

Thus, the embodiments provide for a method implemented in a user agent having a memory storing contents of an elementary file containing a list of wireless local area network (WLAN) based frequencies, which may be public land mobile networks (PLMN) frequencies. The contents of the elementary file further contain at least one entry relating to at least one of regulatory domain information and/or channel allocation information. The method includes updating the list based on the at least one entry and thereafter promoting initial access point scanning using the WLAN based frequencies according to an order specified in the updated list.

In another embodiment, the method further includes connecting to a particular WLAN at a particular frequency, storing in the memory a current regulatory domain associated with the particular WLAN based frequency, and updating the list again such that the UA will, on subsequent attempts to connect, attempt to use a particular ordered set of WLAN based frequencies. The particular ordered set is associated with the current regulatory domain.

In yet another embodiment, at least one of the updated regulatory information and updated channel allocation information is received. In this case, the list is updated again based on the at least one of updated regulatory information and updated channel allocation information.

In still another embodiment, location information is received defining a physical location of the user agent. The updated information is then defined in association with the physical location. The updated information may be regulatory information comprising a plurality of regulatory domains and their corresponding frequently used WLAN based frequencies. Alternatively or in addition, the updated information can be channel allocation information comprising channel ranges.

In an embodiment, updating the list can be accomplished by selecting a particular list from a plurality of lists, wherein the particular list corresponds to a particular detected regulatory domain. In another embodiment, updating the list can be accomplished by changing an order of the list.

In an embodiment, in the elementary file, a corresponding field is associated with each PLMN. In this case, the corresponding field defines corresponding regulatory domain information or channel allocation information.

Figure 4 is a diagram illustrating an example of a system 415 that includes a processor 410 suitable for implementing one or more embodiments disclosed herein. In addition to the processor 410 (which may be referred to as a central processor unit or CPU), the system 415 might include network connectivity devices 420, random access memory (RAM) 430, read only memory (ROM) 440, secondary storage 450, Global Positioning Satellite (GPS) sensor 480, and input/output (I/O) devices 460. These components might communicate with one another via a bus 470. In some cases, some of these components may not be present or may be combined in various combinations with one another or with other components not shown. These components might be located in a single physical entity or in more than one physical entity. Any actions described herein as being taken by the processor 410 might be taken by the processor 410 alone or by the processor 410 in conjunction with one or more components shown or not shown in the drawing, such as a digital signal processor (DSP) 490. Although the DSP 490 is shown as a separate component, the DSP 490 might be incorporated into the processor 410.

The processor 410 executes instructions, codes, computer programs, or scripts that it might access from the network connectivity devices 420, RAM 430, ROM 440, or secondary storage 450 (which might include various disk-based systems such as hard disk, floppy disk, or optical disk). While only one CPU 410 is shown, multiple processors may be present. Thus, while instructions may be discussed as being executed by a processor, the instructions may be executed simultaneously, serially, or otherwise by one or multiple processors. The processor 410 may be implemented as one or more CPU chips.

The network connectivity devices 420 may take the form of one or more of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 420 may enable the processor 410 to communicate with the Internet or one or more telecommunications networks or other networks from which the processor 410 might receive information or to which the processor 410 might output information. The network connectivity devices 420 might also include one or more transceiver components 425 capable of transmitting and/or receiving data wirelessly.

The RAM 430 might be used to store volatile data and perhaps to store instructions that are executed by the processor 410. The ROM 440 is a non-volatile memory device that typically has a smaller memory capacity than the memory capacity of the secondary storage 450. ROM 440 might be used to store instructions and perhaps data that are read during execution of the instructions. Access to both RAM 430 and ROM 440 is typically faster than to secondary storage 450. The secondary storage 450 is typically comprised of one or more disk drives or tape drives and might be used for non-volatile storage of data or as an over-flow data storage device if RAM 430 is not large enough to hold all working data. Secondary storage 450 may be used to store programs that are loaded into RAM 430 when such programs are selected for execution.

The I/O devices 460 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 425 might be considered to be a component of the I/O devices 460 instead of or in addition to being a component of the network connectivity devices 420.

The GPS sensor 480 decodes global positioning system signals, thereby enabling the system 415 to determine its location. The system 415 may also determine its location using the transceiver 425. Location may be determined using Enhanced Observed Time Difference (EOTD), a position-location method wherein the UE triangulates its position using signals received by the transceiver 425. Other common methods of triangulation include Uplink Time Difference of Arrival (U-TDOA), Angle of Arrival (AOA), Location Pattern Matching (LPM) and Advanced Forward Link Trilateration (AFLT).

Additionally, system 415 in Figure 4 might be implemented as a user agent. In this case, system 415 can be referred to as user agent 415. User agent 415 may include subscriber identification module (SIM) storage 495, which is connected to user agent 415 via bus 470, or via any other convenient mechanism. SIM storage 495 may be implemented as a "SIM card;" however, the information commonly stored on SIM storage 495 could be stored in RAM 430, ROM 440, secondary storage 450, or any other additional storage device suitable for use in user agent 415. For purposes of the embodiments described herein, SIM storage 495 is a "SIM card," though any of the other described above implementations could be used.

SIM storage 495 can store elementary files, such as user elementary file 100 in Figure 1 and/or operator elementary file 100 in Figure 2. These files in SIM storage 495 can be accessed by processor 410, which then uses these files to search preferred WLAN based frequencies first. Thus, SIM storage 495 provides a convenient mechanism for implementing the processes described with respect to Figures 1-3.

Thus, the embodiments provide for a user agent that includes a bus, a network connectivity device connected to the bus, and a memory connected to the bus. The memory stores contents of an elementary file that contain or refer to a list of wireless local area network (WLAN) based frequencies, which might be public land mobile network (PLMN) frequencies. The contents of the elementary file further contain or refer to at least one entry relating to at least one of regulatory domain information and/or channel allocation information. The UA also includes a processor connected to the bus. The processor is configured to update the list based on the at least one entry and to promote initial access point scanning of the WLAN based frequencies according to an order specified in the updated list.

The embodiments also provide for a computer readable medium storing a data structure comprising contents of an elementary file for selecting wireless local area network (WLAN) based frequency, which may be a public land mobile network (PLMNs) frequency. The contents of the elementary file comprises a list of WLAN based frequencies and at least one entry relating to at least one of regulatory domain information and/or channel allocation information. The at least one entry can be used to update the list.

The embodiments also provide for a method implemented in a user agent having a memory storing contents of an elementary file containing a list of wireless local area network (WLAN) based frequencies, which may be public land mobile networks (PLMN) frequencies. The contents of the elementary file further contain or refer to at least one entry relating to at least one of regulatory domain information and/or channel allocation information. The method includes updating the list based on the at least one entry and, thereafter, promoting initial access point scanning using the WLAN based frequencies according to an order specified in the updated list.

While several embodiments have been provided in the present disclosure, it should be understood that the disclosed systems and methods may be embodied in many other specific forms without departing from the spirit or scope of the present disclosure. The present examples are to be considered as illustrative and not restrictive and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present discbsure. Other items shown or discussed as coupled or directly coupled or communicating with each other may be indirectly coupled or communicating through some interface, device, or intermediate component, whether electrically, mechanically or otherwise. Other examples of changes, substitutions, and alterations are ascertainable by one skilled in the art.

## Claims

1. A user equipment comprising:
a memory (430, 440, 450, 495) configured to store contents of a 3GPP elementary file comprising a user or operator controlled public land network, PLMN, selector for wireless local area network, WLAN, access (100, 200) containing or referring to:
a list of WLAN frequencies, and a plurality of entries relating to regulatory domain information and/or channel allocation information; and
a processor (410) in communication with the memory, wherein the processor (410) is configured to:
determine a current regulatory domain;
determine a corresponding one of the plurality of entries based on the current regulatory domain;
update the list based on the corresponding one of the plurality of entries; and promote initial access point scanning of the WLAN based frequencies according to an order specified in the updated list (304).

2. The user equipment of claim 1 wherein the processor (410) is further configured, after a successful association with an access point, AP, to store in the memory a current regulatory domain associated with the successful association, and wherein the processor (410) is further configured to update the list again based on the current regulatory domain associated with the successful association (314).

3. The user equipment of claim 1 or claim 2 wherein the processor (410) is further configured to receive at least one of updated regulatory information and updated channel allocation information, and wherein the processor (410) is further configured to update the list again based on the at least one of updated regulatory information and updated channel allocation information.

4. The user equipment of any of the preceding claims wherein, in the contents of the elementary file (100, 200), a corresponding field is associated with a corresponding PLMN frequency, and wherein the corresponding field defines at least one of corresponding regulatory domain information and corresponding channel allocation information.

5. The user equipment of any of the preceding claims wherein the current regulatory domain is determined by a physical location of the user equipment.

6. The user equipment of any of the preceding claims wherein the current regulatory domain is determined by an input received of the user equipment.

7. The user equipment of any of the preceding claims wherein the current regulatory domain is determined by information provided from a network to which the user equipment is attached.

8. A method implemented in a user equipment, UE, having a memory storing contents of a 3GPP elementary file (100, 200) comprising a user or operator controlled public land network, PLMN, selector for wireless local area network, WLAN, access containing or referring to a list of WLAN based frequencies, wherein the contents of the elementary file (100, 200) further contain or refer to a plurality of entries relating to regulatory domain information and/or channel allocation information, the method comprising:
determining a current regulatory domain;
determining a corresponding one of the plurality of entries based on the current regulatory domain;
updating the list based on the corresponding one of the plurality of entries; and
thereafter promoting initial access point scanning using the WLAN based frequencies according to an order specified in the updated list (304).

9. The method of claim 8 further comprising:
connecting to a particular WLAN using a particular frequency (310);
storing in the memory an updated current regulatory domain associated with the particular WLAN (312); and
updating the list again such that the UE will, on subsequent attempts to connect, attempt to use a particular ordered set of WLAN based frequencies, wherein the particular ordered set is associated with the updated current regulatory domain (314).

10. The method of claim 8 or claim 9 further comprising:
before updating the list, adding the at least one entry to a pre-existing elementary file (100, 200).

11. The method of any of claims 8-10 wherein determining the current regulatory domain comprises one or more of the following:
determining a physical location of the user equipment;
receiving input at the user equipment;
obtaining location information from a network to which the user equipment is attached; and
receiving regulatory domain information from a network to which the user equipment is attached.

12. The user equipment or method of any of the preceding claims wherein the regulatory information and/or channel allocation information comprises regulatory information comprising a plurality of regulatory domains and their corresponding WLAN based frequencies.

13. The user equipment or method of any of the preceding claims wherein the regulatory information and/or channel allocation information comprises channel allocation information comprising channel ranges.

14. A computer readable medium having computer-readable code embodied therein for execution by a processor in a computing device for causing the device to implement the steps of the method of any one of claims 8 to 13.

## Patentansprüche

1. Eine Benutzereinrichtung, die aufweist:
einen Speicher (430, 440, 450, 495), der konfiguriert ist zum Speichern von Inhalten einer 3GPP-Elementardatei, die einen von einem Benutzer oder Betreiber gesteuerten PLMN(public land network)-Selektor für einen WLAN(wireless local area network)-Zugang (100, 200) aufweist, enthaltend oder referenzierend zu:
eine Liste von WLAN-Frequenzen und eine Vielzahl von Einträgen in Bezug auf eine Regulierungsdomäne-Information und/oder Kanalzuteilungsinformation; und
einen Prozessor (410) in Kommunikation mit dem Speicher, wobei der Prozessor (410) konfiguriert ist zum:
Bestimmen einer aktuellen Regulierungsdomäne;
Bestimmen eines entsprechenden der Vielzahl von Einträgen basierend auf der aktuellen Regulierungsdomäne;
Aktualisieren der Liste basierend auf dem entsprechenden der Vielzahl von Einträgen; und
Fördern eines anfänglichen Zugangspunkt-Abtastens der WLAN-basierten Frequenzen gemäß einer Reihenfolge, die in der aktualisierten Liste spezifiziert ist (304).

2. Die Benutzereinrichtung gemäß Anspruch 1, wobei der Prozessor (410) weiter konfiguriert ist, nach einer erfolgreichen Assoziierung mit einem Zugangspunkt (AP - access point), zum Speichern in dem Speicher einer aktuellen Regulierungsdomäne, die mit der erfolgreichen Assoziierung assoziiert ist, und wobei der Prozessor (410) weiter konfiguriert ist zum erneuten Aktualisieren der Liste basierend auf der aktuellen Regulierungsdomäne, die mit der erfolgreichen Assoziierung assoziiert ist (314).

3. Die Benutzereinrichtung gemäß Anspruch 1 oder Anspruch 2, wobei der Prozessor (410) weiter konfiguriert ist zum Empfangen zumindest einer aus einer aktualisierten Regulierungsinformation und einer aktualisierten Kanalzuteilungsinformation, und wobei der Prozessor (410) weiter konfiguriert ist zum erneuten Aktualisieren der Liste basierend auf der zumindest einen der aktualisierten Regulierungsinformation und der aktualisierten Kanalzuteilungsinformation.

4. Die Benutzereinrichtung gemäß einem der vorhergehenden Ansprüche, wobei in den Inhalten der Elementardatei (100, 200) ein entsprechendes Feld mit einer entsprechenden PLMN-Frequenz assoziiert ist und wobei das entsprechende Feld zumindest eines aus entsprechender Regulierungsdomäne-Information und entsprechender Kanalzuteilungsinformation definiert.

5. Die Benutzereinrichtung gemäß einem der vorhergehenden Ansprüche, wobei die aktuelle Regulierungsdomäne durch eine physikalische Position der Benutzereinrichtung bestimmt wird.

6. Die Benutzereinrichtung gemäß einem der vorhergehenden Ansprüche, wobei die aktuelle Regulierungsdomäne durch eine Eingabe bestimmt wird, die von der Benutzereinrichtung empfangen wird.

7. Die Benutzereinrichtung gemäß einem der vorhergehenden Ansprüche, wobei die aktuelle Regulierungsdomäne durch Information bestimmt wird, die von einem Netzwerk vorgesehen ist, mit dem die Benutzereinrichtung verbunden ist.

8. Ein Verfahren, das in einer Benutzereinrichtung (UE - user equipment) implementiert ist, die einen Speicher hat zum Speichern von Inhalten einer 3GPP-Elementardatei (100, 200), die einen von einem Benutzer oder Betreiber gesteuerten PLMN(public land network)-Selektor für einen WLAN(wireless local area network)-Zugang aufweist, die eine Liste von WLAN-basierten Frequenzen enthalten oder zu dieser referenzieren, wobei die Inhalte der Elementardatei (100, 200) weiter eine Vielzahl von Einträgen in Bezug auf eine Regulierungsdomäne-Information und/oder Kanalzuteilungsinformation enthalten oder zu dieser referenzieren, wobei das Verfahren aufweist:
Bestimmen einer aktuellen Regulierungsdomäne;
Bestimmen eines entsprechenden der Vielzahl von Einträgen basierend auf der aktuellen Regulierungsdomäne;
Aktualisieren der Liste basierend auf dem entsprechenden der Vielzahl von Einträgen; und
danach Fördern eines anfänglichen Zugangspunkt-Abtastens unter Verwendung der WLAN-basierten Frequenzen gemäß einer Reihenfolge, die in der aktualisierten Liste spezifiziert ist (304).

9. Das Verfahren gemäß Anspruch 8, das weiter aufweist:
Verbinden mit einem bestimmten WLAN unter Verwendung einer bestimmten Frequenz (310);
Speichern in dem Speicher einer aktualisierten aktuellen Regulierungsdomäne, die mit dem bestimmten WLAN assoziiert ist (312); und
erneutes Aktualisieren der Liste derart, dass die UE, bei nachfolgenden Verbindungsversuchen, versuchen wird, einen bestimmten geordneten Satz von WLAN-basierten Frequenzen zu verwenden, wobei der bestimmte geordnete Satz mit der aktualisierten aktuellen Regulierungsdomäne assoziiert ist (314).

10. Das Verfahren gemäß Anspruch 8 oder Anspruch 9, das weiter aufweist:
vor einem Aktualisieren der Liste, Hinzufügen des zumindest einen Eintrags zu einer vorher existierenden Elementardatei (100, 200).

11. Das Verfahren gemäß einem der Ansprüche 8-10, wobei das Bestimmen der aktuellen Regulierungsdomäne eines oder mehrere aus Folgendem aufweist:
Bestimmen einer physikalischen Position der Benutzereinrichtung;
Empfangen einer Eingabe an der Benutzereinrichtung;
Erlangen von Positionsinformation von einem Netzwerk, mit dem die Benutzereinrichtung verbunden ist; und
Empfangen von Regulierungsdomäne-Information von einem Netzwerk, mit dem die Benutzereinrichtung verbunden ist.

12. Die Benutzereinrichtung oder das Verfahren gemäß einem der vorhergehenden Ansprüche, wobei die Regulierungsinformation und/oder die Kanalzuteilungsinformation eine Regulierungsinformation aufweist, die eine Vielzahl von Regulierungsdomänen und deren entsprechende WLAN-basierten Frequenzen aufweist.

13. Die Benutzereinrichtung oder das Verfahren gemäß einem der vorhergehenden Ansprüche, wobei die Regulierungsinformation und/oder die Kanalzuteilungsinformation eine Kanalzuteilungsinformation aufweist, die Kanalbereiche aufweist.

14. Ein computerlesbares Medium mit darin aufgenommenem computerlesbaren Code zur Ausführung durch einen Prozessor in einer Computervorrichtung, um die Vorrichtung zu veranlassen, die Schritte des Verfahrens gemäß einem der Ansprüche 8 bis 13 zu implementieren.

## Revendications

1. Équipement d'utilisateur comprenant :
une mémoire (430, 440, 450, 495) configurée pour stocker le contenu d'un fichier élémentaire 3GPP comprenant un sélecteur de réseau mobile public terrestre, RMPT, commandé par l'utilisateur ou l'opérateur, afin d'accéder à un réseau local sans fil, WLAN pour « *Wireless Local Area Network* »), (100, 200), contenant ou faisant référence à :
une liste de fréquences de réseau WLAN et une pluralité d'enregistrements intéressant des informations de domaines réglementaires et/ou des informations d'attribution de canaux ; et
un processeur (410), en communication avec la mémoire, le processeur (410) étant configuré pour :
déterminer un domaine réglementaire courant ;
déterminer un enregistrement correspondant parmi la pluralité d'enregistrements, en fonction du domaine réglementaire courant ;
mettre à jour la liste en fonction de l'enregistrement correspondant parmi la pluralité d'enregistrements ; et
lancer un balayage initial des points d'accès sur les fréquences de réseau WLAN en fonction d'un ordre spécifié dans la liste mise à jour (304).

2. Équipement d'utilisateur selon la revendication 1, dans lequel le processeur (410) est en outre configuré pour, après réussite de l'association avec un point d'accès, stocker dans la mémoire un domaine réglementaire courant lié à l'association effectuée et dans lequel le processeur (410) est en outre configuré pour mettre à jour la liste une nouvelle fois en fonction du domaine réglementaire courant lié à l'association effectuée (314).

3. Équipement d'utilisateur selon la revendication 1 ou la revendication 2, dans lequel le processeur (410) est en outre configuré pour recevoir au moins soit des informations réglementaires mises à jour, soit des informations d'attribution de canal mises à jour et dans lequel le processeur (410) est en outre configuré pour mettre la liste à jour une nouvelle fois en fonction au moins soit des informations réglementaires mises à jour, soit des informations d'attribution de canal mises à jour.

4. Équipement d'utilisateur selon l'une quelconque des revendications précédentes, dans lequel, dans le contenu du fichier élémentaire (100, 200), une zone correspondante est associée à une fréquence de RMPT correspondante et dans lequel la zone correspondante définit au moins soit des informations de domaine réglementaires correspondantes, soit des informations d'attribution de canal correspondantes.

5. Équipement d'utilisateur selon l'une quelconque des revendications précédentes, dans lequel le domaine réglementaire courant est déterminé par une position physique de l'équipement d'utilisateur.

6. Équipement d'utilisateur selon l'une quelconque des revendications précédentes, dans lequel le domaine réglementaire courant est déterminé par une entrée reçue de l'équipement d'utilisateur.

7. Équipement d'utilisateur selon l'une quelconque des revendications précédentes, dans lequel le domaine réglementaire courant est déterminé par des informations fournies par un réseau auquel est rattaché l'équipement d'utilisateur.

8. Procédé mis en oeuvre sur un équipement d'utilisateur possédant une mémoire stockant le contenu d'un fichier élémentaire 3GPP (100, 200) comprenant un sélecteur de réseau mobile public terrestre, RMPT, commandé par l'utilisateur ou l'opérateur, afin d'accéder à un réseau local sans fil, WLAN pour « *Wireless Local Area Network* »), contenant ou faisant référence à une liste de fréquences de réseau WLAN, dans lequel le contenu du fichier élémentaire (100, 200), en outre, contient ou fait référence à une pluralité d'enregistrements intéressant des informations de domaines réglementaires et/ou des informations d'attribution de canaux, le procédé comprenant les étapes consistant à :
déterminer un domaine réglementaire courant ;
déterminer un enregistrement correspondant parmi la pluralité d'enregistrements, en fonction du domaine réglementaire courant ;
mettre à jour la liste en fonction de l'enregistrement correspondant parmi la pluralité d'enregistrements ; et
lancer ensuite un balayage initial des points d'accès sur les fréquences de réseau WLAN en fonction d'un ordre spécifié dans la liste mise à jour (304).

9. Procédé selon la revendication 8, comprenant en outre les étapes consistant à :
se connecter à un réseau WLAN particulier à l'aide d'une fréquence particulière (310) ;
stocker dans la mémoire un domaine réglementaire courant mis à jour associé au réseau WLAN particulier (312) ; et
mettre une nouvelle fois la liste à jour si bien que l'équipement d'utilisateur, lors des tentatives suivantes de connexion, essaie d'utiliser un ensemble particulier ordonné de fréquences de réseau WLAN, dans lequel l'ensemble particulier ordonné est associé au domaine réglementaire courant mis à jour (314).

10. Procédé selon la revendication 8 ou la revendication 9, comprenant en outre l'étape consistant à :
avant de mettre la liste à jour, ajouter ledit au moins un enregistrement à un fichier élémentaire préexistant (100, 200).

11. Procédé selon l'une quelconque des revendications 8 à 10, dans lequel l'étape de détermination du domaine réglementaire courant comprend une ou plusieurs des étapes consistant à :
déterminer une position physique de l'équipement d'utilisateur ;
recevoir une entrée sur l'équipement d'utilisateur ;
obtenir des informations de position d'un réseau auquel l'équipement d'utilisateur est rattaché ; et
recevoir des informations de domaine réglementaire d'un réseau auquel l'équipement d'utilisateur est rattaché.

12. Équipement d'utilisateur ou procédé selon l'une quelconque des revendications précédentes, dans lequel les informations réglementaires et/ou les informations d'attribution de canaux comprennent des informations réglementaires comportant une pluralité de domaines réglementaires et leurs fréquences de réseau WLAN correspondantes.

13. Équipement d'utilisateur ou procédé selon l'une quelconque des revendications précédentes, dans lequel les informations réglementaires et/ou les informations d'attribution de canaux comprennent des informations d'attribution de canaux comportant des plages de canaux.

14. Support lisible par ordinateur portant matérialisé du code lisible par ordinateur destiné à être exécuté par un processeur d'un dispositif informatique afin de commander au dispositif de mettre en ouvre les étapes du procédé selon l'une quelconque des revendications 8 à 13.
